# EUROPEAN PATENT APPLICATION

(11) **EP 2 928 105 A2**
(43) Date of publication of application: **07.10.2015**
(21) Application number: 14163583.9
(22) Date of filing: 04.04.2014
(51) Int. Cl.: H04L 1/16

(54) **Content delivery architecture**

(30) Priority: 02.04.2014 US 201414243351
(71) Applicant: Nomad Spectrum Limited, Tyne and Wear NE1 3DQ (GB)
(72) Inventor: Nolte, Christian, 31 162 Bad Salzdefurth (DE); Schrader, Marc, Hannover (DE)
(74) Representative: Williams, Michael David

(57) **Abstract**

A method for providing data to a first device aboard a vehicle, comprising, at a first distribution device: detecting establishment of a data connection with at least one device aboard the vehicle; identifying a first piece of a first data item to be sent to the first device aboard the vehicle, the first data item comprising a plurality of pieces; transmitting the first piece to the first device aboard the vehicle; determining whether transmission of the first piece was successful; and if it is determined that the transmission was successful transmitting to a central device a first indication, the first indication indicating that transmission of the first piece was successful.

## Description

### Background

### Technical Field

The present invention relates to methods and systems for providing data connectivity to a vehicle.

### Description of Related Art

With the increased portability of computers, and the increasing sophistication of mobile devices such as mobile telephones and tablet computers, there is a growing demand for connectivity while on the move allowing, for example, connection with other devices, and with the Internet. One response to this demand is based upon devices having built-in long-range telecommunications capabilities, such as devices which make use of mobile telephone networks. While such solutions can be effective, they typically suffer from problems of low bandwidth and incomplete geographic coverage. The problem of low bandwidth is a particular issue when a user wishes to access content comprising a large quantity of data (for example video content). The problem of incomplete geographic coverage is particularly problematic when a user is moving, given that data communication may be interrupted when a signal is lost (for example when a train enters a tunnel).

An alternative method of providing data connectivity to mobile devices is based upon the use of access points. Such access points may be provided, for example, in public buildings such as libraries and cafes, and can be accessed by mobile computing devices which are located within a predetermined range of the access point. One common technology used to allow mobile computing devices to connect to such access points is specified by IEEE standard 802.11, and is commonly referred to as WiFi. The use of access points in this way is advantageous in that it allows higher bandwidth connections to be established.

The limitations of systems based upon the connection of mobile devices to mobile telephone networks has led to the proposal that public transport vehicles, such as trains or buses, may be beneficially provided with wireless access points, such that mobile computing devices used by passengers traveling in the vehicle can be provided with Internet connectivity. The access point provided on the vehicle may connect to devices along the route of the vehicle, those devices providing access to wider networks such as the Internet.

Devices to which a device aboard a vehicle may connect in order to establish a reliable data connection with external devices and networks may be only sparsely and irregularly provided along the vehicle's route. For example, in the example of a device aboard a train configured to connect to WiFi access points, suitable WiFi access points may be provided only at stations at which the train is scheduled to stop. This presents can present problems for data transfer to the device aboard the train. For example, a train may stop at any particular station for an insufficient length of time to allow the transfer of some data items. This is particularly problematic for large data items such as video.

### Brief Summary

It is an object of an embodiment of the present invention to obviate or mitigate at least one of the problems set out above.

In the present specification the term "comprises" and its variants are not intended to exclude the presence of other integers, components or steps. Except where expressly indicated, terms such as "first", "second", etc. do not indicate an ordering, or a temporal relationship, but are merely used as labels to distinguish one integer, component, step, etc. from another integer, component, step, etc.

According to a first aspect of the invention there is provided a method for providing data to a first device aboard a vehicle. The method comprises, at a first distribution device: detecting establishment of a data connection with at least one device aboard the vehicle; identifying a first piece of a first data item to be sent to the first device aboard the vehicle, the first data item comprising a plurality of pieces; transmitting the first piece to the first device aboard the vehicle; determining whether transmission of the first piece was successful; and if it is determined that the transmission was successful transmitting to a central device a first indication, the first indication indicating that transmission of the first piece was successful.

In this way, a proactive method of "pushing" data to a device aboard a vehicle is provided. In the method of the first aspect, rather than the device aboard the vehicle requesting data items, the first distribution device provides data items automatically upon detection of a connection with the device aboard the vehicle. The central device is informed which of the pieces of the first data item have been successfully transmitted to the device aboard the vehicle. The central device may therefore maintain a record of which pieces of the first data item have been transmitted. This record may, for example, be used in the future to determine which pieces of the first device are yet to be successfully received at the device aboard the vehicle and for determining which further pieces of the first data item are to be pushed to the vehicle. The first aspect may be particularly beneficial in embodiments in which connection with distribution devices is fleeting. For example, where the vehicle is a train, the first distribution device may be at a train station at which the vehicle is at rest for only a short period of time. By providing a method in which the transmission between the first distribution device and the device aboard the vehicle has fewer overheads, a maximisation of resources during a time at which the device aboard the vehicle is connected to the first distribution device is provided.

The method may further comprise receiving from the central device a second indication of at least the first data item and which of a plurality of pieces of the first data item require transmission to the first device aboard the vehicle. The second indication may be received before the identifying a first piece and wherein the identifying a first piece is based on the second indication. In this way, the identification by the first device of at least one piece of the first data item to be sent to the first device may be based upon the second indication provided by the central device. In this way, the first distribution device may avoid transmitting unnecessary pieces to the device aboard the vehicle thereby making better use of available resources.

The method may further comprise receiving from the central device data indicating a change in the pieces of the first data item requiring transmission to the first device aboard the vehicle; and updating a local record indicating which of the plurality of pieces of the first data item require transmission to the first device aboard the vehicle. In this way, the first distribution device can identify which pieces of the first data item are to be transmitted based an updated indication of which pieces have already been successfully received by the device aboard the vehicle.

The data indicating a change in the pieces of the at least one data item requiring transmission to the first device aboard the vehicle may be received after the second indication and before the identifying the first piece. Identifying the first piece may be based on the updated local record.

The method may further comprise determining if a further piece of the first data item requires transmission to the first device aboard the vehicle. If it is determined that the further piece requires transmission to the first device aboard the vehicle, the method may further comprise transmitting the further piece to the first device aboard the vehicle and determining whether transmission of the further piece was successful, wherein if it is determined that transmission of the further piece was successful, the first indication indicates that transmission of the further piece was successful.

Detecting establishment of a data connection with at least one device aboard the vehicle may comprise detecting establishment of a data connection with a second device aboard the vehicle; and transmitting the first piece to the first device aboard the vehicle may comprise transmitting the first piece to the second device aboard the vehicle, the second device being arranged to forward the first piece to the first device aboard the vehicle.

The method may further comprise detecting a break of the connection with the at least one device aboard the vehicle and transmitting the indication to the central device in response to the detecting the break. In this way, it is ensured that the central device is provided with the indication at the time it becomes apparent that no further pieces will be transmitted from the first distribution device to the device aboard the vehicle. In circumstances where the device aboard the vehicle is likely to proceed towards a further distribution device, this provides the central device with an opportunity to provide an indication of the pieces of the first data item (or indeed pieces of other data items) to be sent to the device aboard the vehicle to any further distribution devices. The plurality of pieces of the first data item may comprise an order and the indication indicating that transmission of the first piece was successful may comprise an indication of a last piece to be successfully transmitted. The first piece may be the last piece to be successfully transmitted or the first piece may be a piece preceding (according to the order) the last piece to be transmitted. That is, the indication may comprise an indication that a piece following (according to the order) the first piece has been successfully transmitted. It may therefore be determined that, because a piece following the first piece has been successfully received by the device aboard the vehicle, the first piece has also been successfully received by the device aboard the vehicle.

The method may further comprise, at the central device: receiving the first indication; and transmitting a third indication to a second distribution device, the third indication indicating that the first piece does not need transmitting to the device aboard the vehicle. In this way, if the device aboard the vehicle connects with the second distribution device, the second distribution device can use the third indication to maximise use of resources by not transmitting the first piece.

The method may further comprise, at the central device: transmitting the third indication to a plurality of distribution devices.

The method may further comprising, at the central device, determining a plurality of distribution devices with which the at least one device aboard the vehicle may establish a connection; and transmitting the third indication to each of the determined plurality of distribution devices.

The method may further comprise, at the second device aboard the vehicle, receiving a request for the first data item from the first device aboard the vehicle; and transmitting said request to the central device.

The method may further comprise establishing a connection with the first distribution device at a time after the transmitting of the request to the central device.

The method may further comprise, at the central device, receiving the request for the first data item; generating the second indication in response to receiving the request; and transmitting the second indication to the first distribution device.

The vehicle may be a train and the first distribution device may be located at a first train station.

The vehicle may be a train and each of the determined plurality of distribution devices may be located at a train station along a route of the vehicle. For example, the determined plurality of distribution devices may be located at respective train stations at which the vehicle is scheduled to stop or pass through.

According to a second aspect of the present invention, there is provided a method of facilitating transmission of data to a device aboard a vehicle, comprising, at a central device: receiving a first indication from a first distribution device, the first indication indicating that a first piece of a first data item has been successfully transmitted to the device aboard the vehicle, the first data item comprising a plurality of pieces; updating a record of which of the plurality of pieces of the first data item have been successfully transmitted to the first device; and transmitting a second indication to a second distribution device, the second indication indicating that the first piece of the first data item has been successfully transmitted to the device aboard the vehicle.

The method may further comprise transmitting the second indication to a plurality of distribution devices.

The method may further comprise determining a plurality of distribution devices with which the at least one device aboard the vehicle may establish a connection; and transmitting the second indication to each of the determined plurality of distribution devices.

The vehicle may be a train and the first distribution device may be located at a first train station. Where a plurality of distribution devices is determined, each of the determined plurality of distribution devices may be respective train stations along a route of the vehicle.

According to a third aspect of the present invention there is provided an apparatus for providing data to a first device aboard a vehicle, comprising a first distribution device. The first distribution device comprises a network interface for establishing a connection with the device aboard the vehicle; a memory storing computer readable instructions; and a processor arranged to execute the computer readable instructions to: detect establishment of a data connection with at least one device aboard the vehicle; identify a first piece of a first data item to be sent to the first device aboard the vehicle, the first data item comprising a plurality of pieces; transmit the first piece to the first device aboard the vehicle; determine whether transmission of the first piece was successful; and if it is determined that the transmission was successful transmit to a central device a first indication, the first indication indicating that transmission of the first piece was successful.

According to a fourth aspect of the present invention, there is provided an apparatus for facilitating transmission of data to a device aboard a vehicle comprising a central device. The central device comprises a receiver for receiving a first indication from a first distribution device, the first indication indicating that a first piece of a first data item has been successfully transmitted to the device aboard the vehicle, the first data item comprising a plurality of pieces; a processor arranged to update a record of which of the plurality of pieces of the first data item have been successfully transmitted to the first device; and a transmitter for transmitting a second indication to a second distribution device, the second indication indicating that the first piece of the first data item has been successfully transmitted to the device aboard the vehicle.

According to a fifth aspect of the present invention, there is provided a system for providing data to a device aboard a vehicle. The system comprises a first distribution device and a central device. The first distribution device comprises a network interface for establishing a connection with the device aboard the vehicle; a memory storing computer readable instructions; and a processor arranged to execute the computer readable instructions to: detect establishment of a data connection with at least one device aboard the vehicle; identify a first piece of a first data item to be sent to the first device aboard the vehicle, the first data item comprising a plurality of pieces; transmit the first piece to the first device aboard the vehicle; determine whether transmission of the first piece was successful and if it is determined that the transmission was successful transmit to the central device a first indication, the first indication indicating that transmission of the first piece was successful. The central device comprises a receiver for receiving the first indication from the first distribution device; a processor arranged to update a record of which of the plurality of pieces of the first data item have been successfully transmitted to the first device; and a transmitter for transmitting a second indication to a second distribution device, the second indication indicating that the first piece of the first data item has been successfully transmitted to the device aboard the vehicle.

It will be appreciated that aspects of the present invention can be implemented in any convenient way including by way of suitable hardware and/or software. For example, a device arranged to implement the invention may be created using appropriate hardware components. Alternatively, a programmable device may be programmed to implement embodiments of the invention. The invention therefore also provides suitable computer programs for implementing aspects of the invention. Such computer programs can be carried on suitable carrier media including tangible carrier media (e.g. hard disks, CD ROMs and so on) and intangible carrier media such as communications signals.

It will be appreciated that features presented in the context of one aspect of the invention in the preceding and following description can equally be applied to other aspects of the invention. For example, features described with reference to the first and second aspects may be implemented in the apparatus and systems described with reference to the third to fifth aspects as appropriate.

### Brief Description of the Drawings/Figures

An embodiment of the invention will now be described, by way of example, with reference to the accompanying drawings, in which:
Figure 1 is a schematic illustration of a network of devices arranged to provide data to a vehicle;
Figure 2 is a flowchart showing processing carried out at a local distribution server of Figure 1 to provide data to a vehicle;
Figure 3 is a flowchart showing processing carried out at a central server of Figure 1 to provide data to a vehicle; and
Figure 4 is a schematic illustration of components of a device that may be used to implement a device of the network of Figure 1.

### Detailed Description

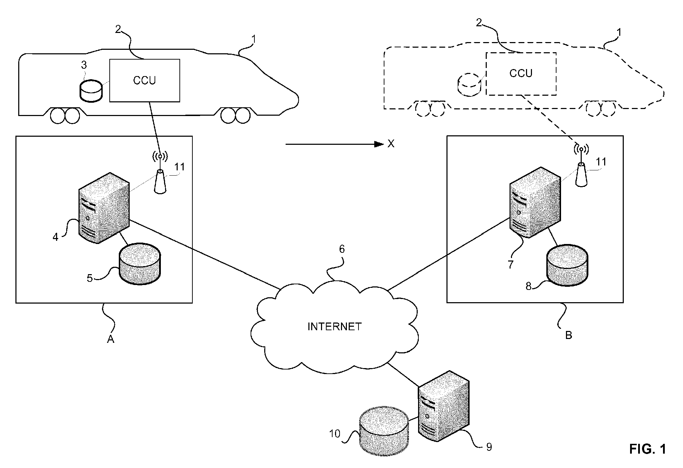

Figure 1 schematically illustrates a network that is used to transmit data to a vehicle, and in particular to a train 1. The train 1 is provided with a first device, referred to herein as a communications control unit (CCU) 2. The functionality of the CCU 2 is described in detail below, and may be implemented in any way appropriate to achieve that functionality. Client devices (not shown) aboard the train 1 may establish a data connection with the CCU 2 such that data may be exchanged between the client devices and the CCU 2. For example, the CCU 2 may provide a WiFi access point to which client devices aboard the train 1 may connect. It will be appreciated that the term client device as used herein is to be taken to encompass any device that is capable of establishing a data connection with the CCU 2. For example, suitable client devices include mobile telephones, tablet computers, laptop computers, etc., and may be used by passengers, or staff (drivers, engineers, conductors, etc.) aboard the train 1. The CCU 2 may be configured to provide access to data stored at a local data store 3 to client devices aboard the train 1. While not shown, the CCU 2 may additionally be arranged to establish direct connections to external networks such as the Internet, and to provide external network connectivity to client devices. For example, the CCU 2 may comprise means for establishing connections to cellular networks.

The train 1 travels in a direction indicated by an arrow X, passing stations A, B along its route. In Figure 1, the train 1 is shown in two positions; the train 1 is shown in solid outline to indicate a present position and in dashed outline to illustrate a future position. In the present position, the train 1 is in proximity to a station A. The station A comprises a computing device 4 referred to herein as a local distribution server. The local distribution server 4 is connected to a data store 5 and to a wide area network (WAN) in the form of the Internet 6. While in the example of Figure 1, the WAN 6 is the Internet, it is to be understood that this is merely exemplary and that connections with other WANs may be provide.

The station B is arranged similarly to the station A. In particular, the station B comprises a computing device 7 in the form of a local distribution server. The local distribution server 7 is connected to a data store 8 and to the Internet 6. A third computing device 9 provides a central server. The central server 9 is connected to a central data store 10 and to the Internet 6. The central server 9 is arranged to communicate with each of the local distribution servers 4 and 7 via the Internet 6.

The CCU 2 is arranged to wirelessly connect with a local distribution server when the train 1 is near to a station provided with a suitable local distribution server. The station A is provided with a wireless transceiver 11 connected to the local distribution server 4, by which the CCU 2 may establish wireless connections between the CCU 2 and the local distribution server 4 when, as in the first position, the train is near to the station A (for example when the train is stopped at the station A). Similarly, the station B is provided with a wireless transceiver 12 connected to the local distribution server 7 and by which the CCU 2 may establish wireless connections with the local distribution server 7 when, as in the indicated future position, the train 1 is near to the station B.

The local distribution server 4 is configured to detect when the CCU 2 establishes a connection with the local distribution server 4 via the wireless transceiver 11 and, upon detection of the connection, to "push" data items to the CCU 2 from the data store 5. That is, the CCU 2 need not request data items from the local distribution server 4, but may simply receive data items that the local distribution server 4 is configured to transmit to the CCU 2. Similarly, the local distribution server 7 is configured to detect when the CCU 2 establishes connection with the local distribution server 7 via the wireless transceiver 12 and, upon detection, to begin pushing data items to the CCU 2 from the local data store 8. Data received at the CCU 2 from the local distribution servers 4, 7 may be stored in the local data store 3 and used by the CCU 2 and/or made available for access to client devices aboard the train 1. Alternatively, the data received by the CCU 2 from the local distribution servers may be immediately routed to a client device without storage at a local data store.

Data stored at the data stores 5, 8 for provision to the CCU 2 may be provided to the local distribution servers 4, 7 by the central server 9. For example, the central server 9 may provide updates to software configured to be run on the CCU 2 (and other CCUs in a fleet of vehicles). The updated software may then be sent from the central server 9 to the local distribution servers 4, 5 for storage in the station data stores 5, 8 before transmission to the CCU 2 upon connection of the CCU 2 to the local distribution server 4, 5. Similarly, content (such as, for example, multimedia content) to be provided by the CCU 2 for consumption by passengers aboard the train 1 may be centrally managed at the central server 9 and transmitted to the local distribution servers 4, 7 for provision to the CCU 2. The data stores 5, 8 may therefore store copies of the same data items for provision to the CCU 2. In this way, for example, if a data item is not transmitted from the local distribution server 4 while the train 1 is near to the station A, that data item may be transmitted from the local distribution server 7 when the train is near to the station B.

The central server 9 maintains a central transmission record indicating data items that are to be sent to the CCU 2 from local distribution servers 4, 7. Each data item is transmitted to the CCU 2 from the local distribution servers 4, 7 in a plurality of pieces with the central transmission record indicating, for each data item, which pieces have been successfully transmitted to the CCU 2. An example of a suitable structure for the central transmission record is illustrated in Table 1 below, although it is to be understood that this is merely exemplary, and that the central transmission record may be stored in any suitable way.

**Table 1**

| **CCU ID** | **Data Item** | **Last succesful piece** |
|---|---|---|
| CCU2 | data_item_1 | 5 |
| CCU2 | data_item_2 | 1 |
| CCU2 | data_item_3 | 0 |

Table 1 shows a table having three columns. A first column 'CCU ID' stores an identifier for a particular CCU. The CCU identifier may take any appropriate form as will be readily apparent to the skilled person. In one example, the CCU identifier may be a MAC address of the CCU. In the present example, only one CCU, the CCU 2, is shown. It will be appreciated, however, that other CCUs may be present. For example, embodiments of the invention may be used across a fleet of vehicles, such as trains, and different data items may be scheduled for transmission to different CCUs. In other embodiments, a separate central transmission record may be stored for each CCU in a fleet, such that the first column may be unnecessary. A second column 'Data Item' stores a reference to a data item that is to be sent to the CCU indicated in the first column. Again, the data item reference stored in the second column may take any appropriate form that allows each local distribution server 4, 7 to identify and locate the relevant data item. Table 1 shows three data items, each to be sent to the CCU 2. A final column 'Last successful piece' indicates the last successful piece of that data item to be sent to the indicated CCU.

In example of Table 1, the respective pieces of a data item are transmitted to the CCU 2 in a predetermined order. In this way, an indication of a "last successful piece" of a data item to be transmitted, in combination with knowledge of the total number of pieces, inherently indicates whether, and which, pieces remain to be transmitted. It will be appreciated that the predetermined order may be any suitable order and need not correspond to an order of bits of a data item. In other examples, pieces of a data item need not be sent in a predetermined order. Where pieces of a data item are not sent in a predetermined order, the central transmission record for that data item may comprise a separate entry for each piece, in which entries can be stored an indication of whether that piece has been successfully transmitted to the CCU.

Each of the local distribution servers 4, 7 may maintain a local copy (referred to herein as a local transmission record) of the central transmission record, with each local distribution server 4, 7 being responsible for updating its local transmission record to indicate successful transmission of data to the CCU 2. For example, while transmitting pieces of data items to the CCU 2, the local distribution server 4 updates its local transmission record to indicate which pieces it has successfully transmitted to the CCU 2. When the train 1 moves away from the station A such that the connection between the CCU 2 and the wireless transceiver 11 is lost, the local distribution server 4 transmits to the central server 9 an indication of which pieces have been successfully transmitted to the CCU 2. For example, the local distribution server 4 may transmit an updated copy of its local transmission record to the central server 9, or may simply transmit an appropriate change log. In response to receiving updated information from the local distribution server 4, the central server 9 updates the central transmission record and propagates those updates to other local distribution servers along the route of the train 1, such as the local distribution server 7. Again, updates propagated by the central server 9 may take any suitable form, including for example, the entire central transmission record, or simply change logs indicated changes to be made to local transmission records. The local distribution server 7 updates its local transmission record based on the updates received from the central server 9.

The central distribution server 9 may propagate updates to all stations (i.e. including previously visited stations) along a route of the CCU 2. Alternatively, the central server 9 may propagate updates only to those stations likely to be visited by the train 1 within a predetermined period of time. That is, the central server 9 may determine, based on a predetermined route of the train 1, which stations that train 1 is likely to visit, for how long, and at what time. The central server 1 may then decide, for example, that only the next station need receive updates at this stage. For example, based on a remaining amount of data to be transmitted to the CCU 2, it may be determined that all of the remaining data is able to be transmitted from the next station. Where, following receipt of data from a local distribution server, a CCU no longer requires any data, an appropriate update may be provided to all local distribution servers with which the CCU may connect.

Upon reaching the second station B, the CCU 2 establishes a connection with the wireless transceiver 12, and thereby the local distribution server 7. The local distribution server 7 detects the establishment of a connection with the CCU 2 and in response to that detection begins pushing those data items which the CCU 2 is scheduled to receive. It will be appreciated that because the local distribution server 7 has received the updated records from the centralised server 9, the local distribution server 7 is able to begin transmission of a next piece of a data item to be transmitted, without transmitting data that has already been received at the CCU 2.

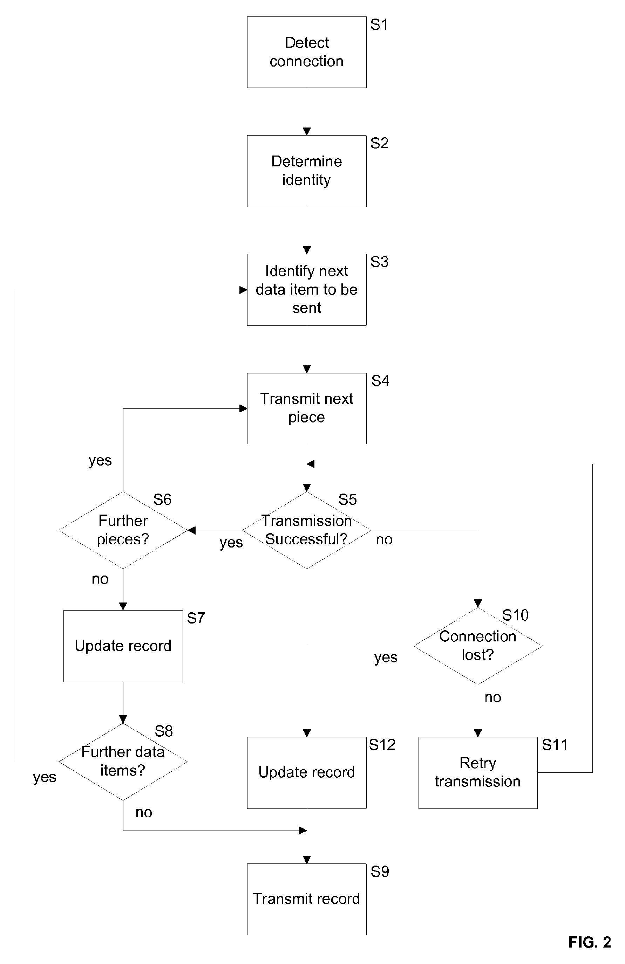

An example of processing carried out by the local distribution servers 4, 7 is described with reference to the flowchart of Figure 2. At a step S1, the local distribution server detects connection of a CCU. The local distribution server determines the identity of the CCU at step S2. At step S3, the local distribution server examines its local transmission record to identify a data item to be transmitted to the CCU. For example, taking the Table 1 above as the local transmission record, the data_item_1 may comprise a total of five pieces, such that it can be determined that the data_item_1 has already been fully transmitted to the CCU. The data_item_2 may comprise six pieces, such that the local distribution server can determine that five pieces of the data_item_2 remain to be sent to the CCU. At step S3, therefore, the local distribution server would determine that the next data item to be sent is the data_item_2.

Processing passes to step S4 at which the next piece (the second piece in the example of Table 1) is transmitted to the CCU. Processing passes from step S4 to step S5 at which it is determined whether the transmission of step S4 was successful. Determination of whether a transmission was successful may, for example, be based upon receipt of an acknowledgement from the CCU, but may be accomplished in any other appropriate way. If it is determined at step S5 that the transmission at step S4 was successful, processing passes to step S6 at which it is determined whether there are further pieces of the current data item to be sent to the CCU. If it is determined at step S6 that there are further pieces of the current data item to be sent to the CCU, processing passes from step S6 to step S4 at which the next piece is transmitted. It will be appreciated, therefore, that while transmission remains successful and while there are further pieces to transmit, processing loops between steps S4, S5 and S6 until all pieces of a data item have been sent to the CCU.

If it is determined at step S6 that all pieces of the current data item have been successfully transmitted to the CCU, processing passes to step S7 at which the local transmission record is updated to indicate that the last successful piece of the current data item is the last piece of that data item. In this way, the local transmission record indicates that there are no further pieces to be transmitted for the current data item. Processing then passes to from step S7 to step S8 at which it is determined whether there are further data items to be transmitted to the CCU. If it is determined at step S8 that there are further data items to be sent to the CCU, processing passes from step S8 to step S3 at which the next data item to be transmitted is determined.

If, on the other hand, it is determined at step S8 that there are no further data items to be transmitted to the CCU, processing passes from step S8 to step S9 at which the updated local transmission record is transmitted to the central server 9.

If it is determined at step S5 that transmission of a piece to the CCU has been unsuccessful, processing passes from step S5 to step S10 at which it is determined whether a connection between the local distribution server and the CCU has been lost. Loss of connection with the CCU may indicate, for example, that the train which the CCU is aboard has left the station. If it is determined that connection with the CCU has not been lost (i.e. that transmission failure was for another reason) processing passes to step S11 at which transmission of the failed piece is retried. Processing passes from step S11 to step S5.

If it is determined at step S10 that connection with the CCU has been lost, processing passes from step S10 to step S12 at which the local transmission record is updated to indicate the last piece that was successfully transmitted to the CCU. Processing passes from step S12 to step S9.

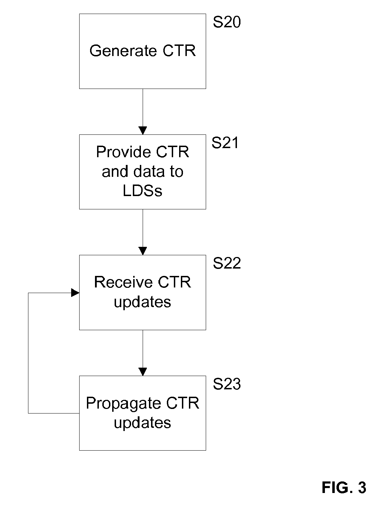

Figure 3 illustrates processing carried out by the central server 9. At step S20, the central transmission record is generated and stored at the central server 9. The central transmission record may be generated wholly or partly automatically or may be generated by an administrator of the central server 9. For example, the central server 9 may be configured to retrieve data automatically (such as, for example, sports scores, weather, vehicle maintenance schedules, etc.) and to generate a central transmission record therefrom. Processing passes from step S20 to step S21 at which the central transmission record and the data items referred to therein are transmitted to the local distribution servers.

From step S21, processing passes to step S22 at which the central server 9 receives an update to the central transmission record from one of the local distribution servers 4, 5. The central server 9 incorporates the updates received at step S22 and at step S23 propagates the updated central transmission record to each other station arranged to transmit data to the affected CCUs. Processing passes from step S23 back to step S22 when further updates to the central transmission record are received. It will be appreciated that there may be some time between the provision of the transmission records at step S21 and the receipt of updates at step S22, and that similarly there may be some time between the propagation of updates at step S23 and the receipt of further updates at step S22. Additionally, it will be understood that new central transmission records may be generated at any time, restarting the processing of Figure 3.

By the processing of Figures 2 and 3, a system is provided that is able to efficiently transmit data to a CCU aboard a vehicle, ensuring, through the updating of the local transmission records and the central transmission record, that each local distribution server transmits only parts of the data that the CCU is yet to receive. It is to be understood, however, that the processing of Figures 2 and 3 is merely exemplary. For example, while Figure 2 illustrates updating of a local transmission record after determining that there are no further pieces of a data item or after a connection has been lost, the local records may be updated at any stage. More generally, it will be appreciated that there are other options to the processing of Figures 2 and 3, that these are envisaged and will be readily appreciated by the skilled person from the teaching herein.

It is described above that the central server 9 provides data to the local distribution servers 4, 7. Additionally or alternatively, the local distribution servers 4, 7 may obtain and store data for transmission to the CCU 2 from sources other than the central server 9. For example, administrators local to the distribution servers 4, 7 (such as station managers) may determine content that is to be provided from the stations A, B to the CCU 2.

Data to be provided to the CCU 2 may be data that is requested from a client device aboard the train 1. For example, a client device that is connected to the CCU 2 may request a data item (for example a web-page, a video, etc.) that is available over the Internet. For example, a user of a client device may attempt to navigate to a web-page using a web-browser operating on the client device. The request is transmitted from the client device to the CCU 2. When the CCU 2 establishes a connection with the Internet 6 (e.g. via a local distribution server 4, 7 or by other means), the request may be forwarded from the CCU 2 to the central server 9. The central distribution server 9 may obtain the requested data item over the Internet 6 and add that data item to the central distribution record. In this way, files requested over the Internet by client devices aboard the train 1, may be efficiently provided to the requesting client device by a plurality of local distribution servers.

At least some data items may not be provided to the CCU 2 for storage at the data store 3, but may instead be provided directly to a client device aboard the train 1 via the CCU 2. It will be appreciated that in such embodiments, central transmission records, and local transmission records may be defined with reference to each client device, rather than, or in addition to, a particular CCU 2.

It is described above that data is stored at data stores local to each local distribution server. In some embodiments storage at a local distribution server may be beneficial given the relatively short periods for which a train may be sufficiently close to a station to establish a suitable connection. In particular, by storing data at a data store local to the local distribution server, it can be ensured that the local distribution server is able to initialise transmission of the necessary data without engaging in time consuming communication with, and without transmission of the data pieces from, the central server 9. In other embodiments, however, data to be sent to a CCU may be stored centrally (for example at the central data store 10) and provided to a CCU from the central data store via a local distribution server.

In some embodiments, in order to make decisions about files to transmit to a CCU 2 or to client devices aboard the train 1, the central server 9 may maintain a capabilities database indicating capabilities of client devices. For each client device that connects with the CCU 2, information may be stored by the central server 9 indicating capabilities of the client device which determine which files or types of files would be appropriate for transmission to that client device.

For example, information regarding supported screen resolutions, processor speeds, screen size, etc. may be associated with a client device. Some information, such as physical hardware specifications of a mobile telephone device, may be based on prestored information relating to the model of mobile device. As will be readily apparent to the skilled person, information regarding a model of device may be ascertained through handshake protocols upon connection establishment (for example between the CCU 2 and the client device, or between the client device and a local distribution server 4, 7 via the CCU 2). Other details may be associated with a client device based on information obtained from a client device in response to provision of, for example, unsupported files. In this way, files scheduled for delivery to a client device by the central server 9 may be tailored to the capabilities of that client device.

It will be appreciated that the local distribution servers may be located at any convenient position along a route and need not be at train stations.

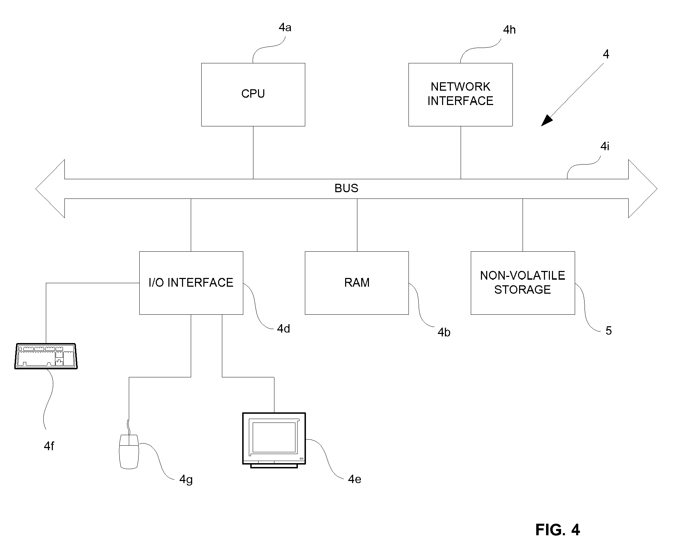

Figure 4 schematically illustrates an exemplary arrangement components which may be used to implement the local distribution server 4. A similar arrangement of components to that illustrated in Figure 4 may also be used to implement other devices, for example the local distribution server 5 and/or the central server 9.

It can be seen that the local distribution server 4 comprises a CPU 4a which is configured to read and execute instructions stored in a volatile memory 4b which takes the form of a random access memory. The volatile memory 4b stores instructions for execution by the CPU 4a and data used by those instructions. For example, the instructions may include the instructions for causing the local distribution server 4 to carry out the processing described above with reference to Figure 3.

As shown in Figure 1, the local distribution server is connected to the storage device 5. It will be appreciated that the storage device 5 may be implemented in any way, such as for example, a hard disk drive, a solid state drive, etc. The local distribution server 4 further comprises an I/O interface 4d to which are connected peripheral devices used in connection with the local distribution server 4. More particularly, a display 4e is configured so as to display output from the local distribution server 4. Input devices are also connected to the I/O interface 4d. Such input devices include a keyboard 4f and a mouse 4g which allow user interaction with the local distribution server 4. A network interface 4h allows the local distribution server 4 to be connected to appropriate computer networks, such as the Internet 6, and so as to be able to send and receive from and to other computing devices such as the CCU 2. The CPU 4a, volatile memory 4b, the storage device 5, I/O interface 4d, and network interface 4h, are connected together by a bus 4i.

It will be appreciated that the arrangement of components illustrated in Figure 4 is merely exemplary, and that the local distribution server 4 may comprise additional or fewer components than those illustrated in Figure 4. Indeed, the local distribution server 4 may comprise a plurality of computers, similar to, or arranged differently from, the local distribution server 4. For example, the local distribution server 4 may comprise a plurality of computers respectively adapted to provide, *inter alia,* a web server, an application server, a gateway server and a database server, etc. That is, it is to be understood that the local distribution server 4 may be implemented using any appropriate configuration as will be readily appreciated by those skilled in the art. It will also be appreciated that the local distribution server 7, the central server 9 and the CCU 2 may each comprise computers implemented similarly to the local distribution server 4, or again using any appropriate configuration.

It has been explained in the preceding description that the CCU 2 is arranged to provide wireless network connectivity onboard the train 1 such that passengers travelling on the train 1 can use mobile computing devices to connect to the CCU 2. It will be appreciated that in some embodiments of the invention the CCU 2 is not adapted to provide wireless network connectivity onboard the train. Such embodiments can be useful in providing, for example, telemetry services and closed circuit television. In such cases, data items received at the CCU 2 from the local distribution servers may comprise data items for use by the CCU 2 itself.

The preceding description has been concerned with an embodiment in which the CCU 2 is associated with a train. It will be appreciated that the methods described herein are in no way limited to trains, but are instead widely applicable to any situation in which data communication is provided to a moving person or object. In particular, the methods described can be used to provide data communication to other vehicles (e.g. busses and cars).

## Claims

1. A method for providing data to a first device aboard a vehicle, comprising, at a first distribution device:
detecting establishment of a data connection with at least one device aboard the vehicle;
identifying a first piece of a first data item to be sent to the first device aboard the vehicle, the first data item comprising a plurality of pieces;
transmitting the first piece to the first device aboard the vehicle;
determining whether transmission of the first piece was successful; and
if it is determined that the transmission was successful transmitting to a central device a first indication, the first indication indicating that transmission of the first piece was successful.

2. The method of claim 1, further comprising receiving from the central device a second indication of at least the first data item and which of a plurality of pieces of the first data item require transmission to the first device aboard the vehicle, wherein, optionally, the second indication is received before the identifying a first piece and identifying a first piece is based on the second indication.

3. The method of claim 1 or 2, further comprising receiving from the central device data indicating a change in the pieces of the first data item requiring transmission to the first device aboard the vehicle; and
updating a local record indicating which of the plurality of pieces of the first data item require transmission to the first device aboard the vehicle.

4. The method of claim 3, wherein the data indicating a change in the pieces of the at least one data item requiring transmission to the first device aboard the vehicle is received after the second indication and before the identifying the first piece, wherein identifying the first piece is based on the updated local record.

5. The method of any of claims 1 to 4, further comprising determining if a further piece of the first data item requires transmission to the first device aboard the vehicle;
if it is determined that the further piece requires transmission to the first device aboard the vehicle, transmitting the further piece to the first device aboard the vehicle and determining whether transmission of the further piece was successful;
wherein if it is determined that transmission of the further piece was successful, the first indication indicates that transmission of the further piece was successful.

6. The method of any preceding claim, wherein detecting establishment of a data connection with at least one device aboard the vehicle comprises detecting establishment of a data connection with a second device aboard the vehicle; and
wherein transmitting the first piece to the first device aboard the vehicle comprises transmitting the first piece to the second device aboard the vehicle, the second device aboard the vehicle being arranged to forward the first piece to the first device aboard the vehicle.

7. The method of any preceding claim, wherein the plurality of pieces of the first data item comprises an order and the indication indicating that transmission of the first piece was successful comprises an indication of a last piece to be successfully transmitted;
wherein the first piece is the last piece to be successfully transmitted or the first piece is before the last piece in the order.

8. The method of any preceding claim, further comprising at the central device:
receiving the first indication; and
transmitting a third indication to a second distribution device, the third indication indicating that the first piece does not need transmitting to the device aboard the vehicle.

9. The method of claim 8, further comprising at the central device determining a plurality of distribution devices with which the at least one device aboard the vehicle may establish a connection; and
transmitting the third indication to each of the determined plurality of distribution devices.

10. The method of claim 6 or any claim dependent thereon, further comprising at the second device aboard the vehicle:
receiving a request for the first data item from the first device aboard the vehicle; and
transmitting said request to the central device;
the method optionally further comprising establishing a connection with the first distribution device at a time after the transmitting of the request to the central device.

11. The method of claim 10 as dependent on claim 2 or any claim dependent thereon, further comprising at the central device:
receiving the request for the first data item;
generating the second indication in response to receiving the request; and
transmitting the second indication to the first distribution device.

12. A method of facilitating transmission of data to a device aboard a vehicle, comprising at a central device:
receiving a first indication from a first distribution device, the first indication indicating that a first piece of a first data item has been successfully transmitted to the device aboard the vehicle, the first data item comprising a plurality of pieces;
updating a record of which of the plurality of pieces of the first data item have been successfully transmitted to the first device; and
transmitting a second indication to a second distribution device, the second indication indicating that the first piece of the first data item has been successfully transmitted to the device aboard the vehicle.

13. The method of claim 12, further comprising:
transmitting the second indication to a plurality of distribution devices; the method optionally further comprising:
determining a plurality of distribution devices with which the at least one device aboard the vehicle may establish a connection; and
transmitting the second indication to each of the determined plurality of distribution devices.

14. An apparatus for providing data to a first device aboard a vehicle, comprising a first distribution device, the first distribution device comprising:
a network interface for establishing a connection with the device aboard the vehicle;
a memory storing computer readable instructions; and
a processor arranged to execute the computer readable instructions to:
detect establishment of a data connection with at least one device aboard the vehicle;
identify a first piece of a first data item to be sent to the first device aboard the vehicle, the first data item comprising a plurality of pieces;
transmit the first piece to the first device aboard the vehicle;
determine whether transmission of the first piece was successful; and
if it is determined that the transmission was successful transmit to a central device a first indication, the first indication indicating that transmission of the first piece was successful.

15. An apparatus for facilitating transmission of data to a device aboard a vehicle, comprising a central device, the central device comprising:
a receiver for receiving a first indication from a first distribution device, the first indication indicating that a first piece of a first data item has been successfully transmitted to the device aboard the vehicle, the first data item comprising a plurality of pieces;
a processor arranged to update a record of which of the plurality of pieces of the first data item have been successfully transmitted to the first device; and
a transmitter for transmitting a second indication to a second distribution device, the second indication indicating that the first piece of the first data item has been successfully transmitted to the device aboard the vehicle.
